# EUROPEAN PATENT APPLICATION

(11) **EP 1 264 994 A2**
(43) Date of publication of application: **11.12.2002**
(21) Application number: 02012392.3
(22) Date of filing: 06.06.2002
(51) Int. Cl.: F16B 23/00, B25B 15/00

(54) **Threaded fastener and threaded fastener clamping tool**

(30) Priority: 06.06.2001 JP 2001170794; 06.06.2001 JP 2001170795
(71) Applicant: AOYAMA SEISAKUSHO CO., LTD., Nagoya-shi, Aichi-ken (JP)
(72) Inventor: Mizuno, Masataka, Aoyama Seisakusho Co., Ltd., Niwa-gun, Aichi-ken (JP); Kato, Atsushi, Aoyama Seisakusho Co., Ltd., Niwa-gun, Aichi-ken (JP); Tsuchiya, Yasuhiro, Aoyama Seisakusho Co., Ltd., Niwa-gun, Aichi-ken (JP)
(74) Representative: Betten & Resch

(57) **Abstract**

A threaded fastener formed on the middle of a head thereof comprises a concave or convex drive shape adapted to engage with a clamping tool. The drive shape comprises projections equiangularly spaced from one another to extend radially from an axis of the threaded fastener, curved portions formed between the projections to dent toward the axis, and drive surfaces formed between the projections and the curved portions. Clamping forces acting on the drive surfaces are directed toward substantially perpendicular to a straight line passing through the axis and apices of the projections.

## Description

### FIELD OF THE INVENTION

The invention relates to a threaded fastener such as bolts, machine screws, tapping screws or the like, and a threaded fastener clamping tool for use in clamping of the threaded fastener. Specifically, the invention relates to a threaded fastener and a threaded fastener clamping tool, in which a clamping tool such as shuttle driver bits or the like can be correctly fitted on the threaded fastener and clamping of the threaded fastener can be rapidly made by transmitting an appropriate clamping stress to the threaded fastener.

### BACKGROUND OF THE INVENTION

An operation of clamping a polygonal bolt formed with a square or hexagonal head is made by means of a clamping tool, such as sockets, spanners or the like, for rotating the bolt. Also, an operation of clamping a bolt with a hole, of which a head is formed with a hexagonal hole or a cross-shaped hole, is made by means of a clamping tool, such as shuttle drivers, shuttle driver bits, socket wrenches or the like, having a tip end shaped to be able to fit to such hole. In the case of clamping a hexagonal bolt by means of, for example, a socket wrench, workability is not good because the socket wrench is relatively heavy. Therefore, socket wrenches are not suited to a sequential operation, in which a multiplicity of bolts should be clamped in a short time. Also, since socket wrenches are expensive, there is caused an increase in cost when socket wrenches are damaged.

Also, at the time of clamping the above-mentioned conventional bolt with a hole, there is in some cases caused a coming-out phenomenon, in which a clamping tool, such as shuttle drivers, wrenches or the like, is disengaged from a fitting portion of the bolt with a hole. When such coming-out is generated, the fitting portion may be damaged. In the case of clamping or removing, for example, a threaded fastener with a cross-shaped hole by means of a plus shuttle driver, there is the possibility that coming-out is sporadically generated. When such coming-out is repeatedly generated, the cross-shaped hole of a threaded fastener is gradually deformed or damaged to lead to a disadvantage that clamping and dismounting of the threaded fastener become difficult or impossible.

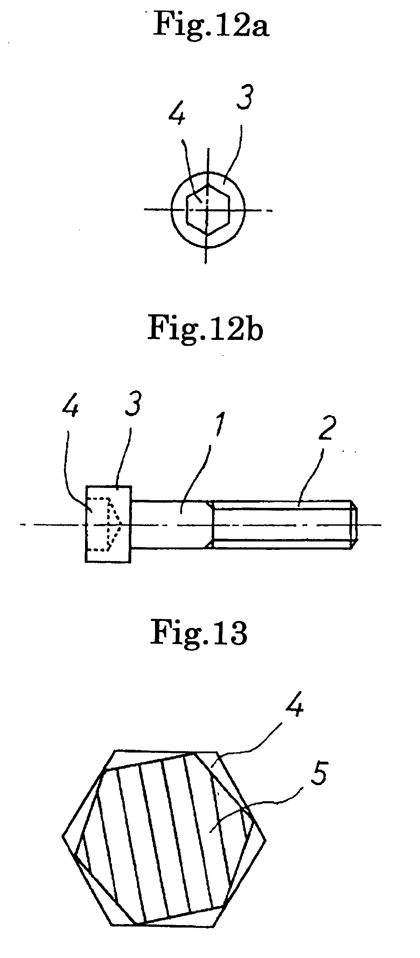

For example, a bolt shown in Fig. 12 comprises a shank 1 formed with screw threads 2, and a head 3 formed with a torque transmitting portion 4 which is concave and regular-hexagonal in outer shape. When the bolt is clamped by means of a somewhat worn hexagonal wrench or a hexagonal wrench having involved a clearance in manufacture, the torque transmitting portion 4 may be deformed or damaged. This is caused since side surfaces of the torque transmitting portion 4 come not in surface contact but in line contact with the hexagonal wrench 5 so that a clamping force is locally applied. When such deformation or damage is gradually made great, there is caused a disadvantage that clamping and dismounting of the threaded fastener become difficult or impossible.

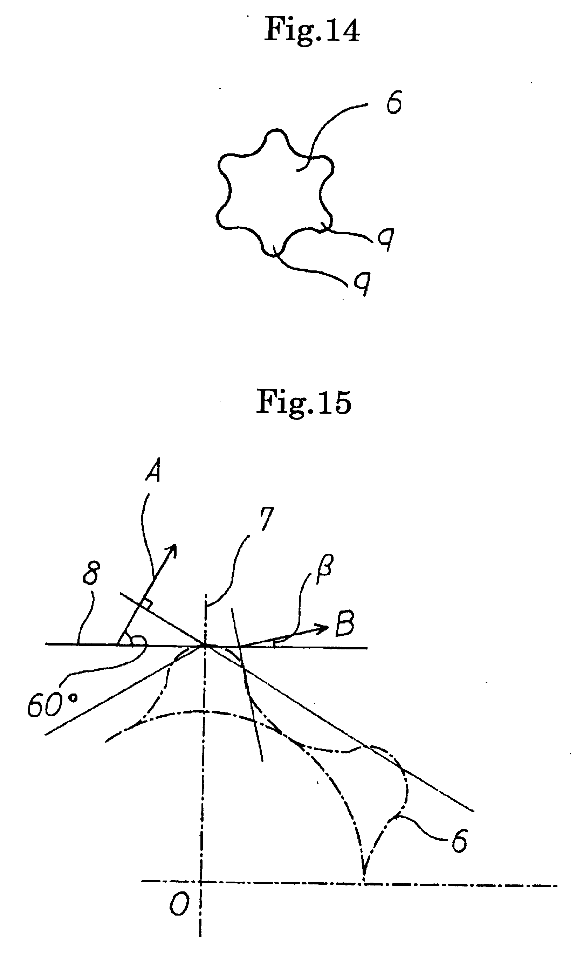

In order to prevent the above-mentioned coming-out, a torque transmitting portion having an external shape as shown in Fig. 14 has been devised. This is called a Hex lobular specified as F116 of Japanese Automobile Standards (JASO).

As shown in Fig. 15, directions A of a clamping stress applied on side surfaces of a conventional torque transmitting portion having a regular hexagonal shape are perpendicular to the respective side surfaces. The direction A forms 60° relative to a straight line 8 perpendicular to a straight line 7 connecting between the axis O of a bolt and one of apices of a regular hexagon. Therefore, the direction A is directed outwardly of a direction, in which a bolt rotates at an apex. Therefore, the clamping stress is markedly reduced in transmission efficiency.

In order to solve this problem, a hex lobular 6 shown in Fig. 14 has been proposed. The hex lobular 6 is shaped such that six projections (lobules) 9 are equiangularly spaced from one another to extend in six directions from the axis O. Direction B of a clamping stress applied on side surfaces of the hex lobular 6 forms β of 15° relative to a straight line 8 perpendicular to a straight line 7 connecting between the axis O of a head and one of apices of the projections, as shown in Fig. 15. Therefore, a clamping stress applied on the hex lobular 6 can be made higher in transmission efficiency than a conventional torque transmitting portion having a regular hexagonal shape.

However, the direction B of a clamping stress is still directed outwardly of a direction of rotation, thereby the clamping stress remains low in transmission efficiency.

The above-mentioned hex lobular 6 can reduce generation of coming-out of a clamping tool. However, the hex lobular 6 becomes difficult to form because of complexity in shape. Also, because of a need of an exclusive clamping tool having a special shape, there is caused a disadvantage that a universal clamping tool cannot be used.

For example, in the case of clamping a multiplicity of threaded fasteners in a production process, there is caused a need of using an exclusive clamping tool every different threaded fastener. Therefore, a clamping operation takes much time, which leads to reduction in workability. In such case, time taken in selecting or exchanging a clamping tool with another one can be omitted if a clamping tool usable in common to different threaded fasteners can be used in the clamping operation. In particular, the working efficiency can be enhanced if an exclusive clamping tool and a universal clamping tool can be used in common for several kinds of threaded fasteners having somewhat different thread part outer diameters.

In order to solve the above-mentioned problems of the conventional art, the invention provides a threaded fastener having a drive shape capable of preventing coming-out at the time of clamping the threaded fastener and efficiently transmitting a clamping stress of a clamping tool to the threaded fastener, and a threaded fastener clamping tool. The invention also provides a threaded fastener and a threaded fastener clamping tool, by which a clamping operation can be made rapidly. Further, the invention provides a threaded fastener, which can be clamped by means of a universal clamping tool as well as an exclusive clamping tool without generation of coming-out.

### SUMMARY OF THE INVENTION

A threaded fastener according to the invention is structured such that direction, in which clamping forces act on drive surfaces of a drive shape, is made substantially perpendicular to a straight line passing through an axis of the threaded fastener and apices of projections. Also, a threaded fastener according to the invention is structured such that in the case where an extension surface is formed to extend from the drive surfaces, the axis of the threaded fastener is positioned in the extension surface. Further, a threaded fastener according to the invention is structured such that clamping forces acting on the two drive surfaces are dispersed in two directions.

With such structure, it is possible to provide a threaded fastener capable of preventing coming-out at the time of clamping the threaded fastener and efficiently transmitting a clamping stress of a clamping tool to the threaded fastener.

Also, a threaded fastener clamping tool according to the invention is formed at a tip end thereof with a concave or convex engaging portion, which is adapted to closely engage with the drive shape of the threaded fastener. With such structure, it is possible to provide a threaded fastener clamping tool capable of preventing coming-out at the time of clamping the threaded fastener and efficiently transmitting a clamping stress of the clamping tool to the threaded fastener.

Further, a threaded fastener according to the invention is structured such that a concave drive shape comprises grooves equiangularly spaced from one another and extending radially, and a mount space formed centrally of the head and communicated to the grooves, the mount space enabling mounting thereon a polygonal wrench.

With such structure, it is possible to provide a threaded fastener, which can be clamped by means of not only an exclusive clamping tool but also a universal clamping tool and by which a clamping operation can be enhanced in efficiency.

Further, a threaded fastener clamping tool according to the invention comprises a concave or convex engaging portion adapted to closely engage with the drive shape of the threaded fastener and is formed with grooves or ridges equiangularly spaced from one another and extended radially from an axis of the threaded fastener.

With such structure, it is possible to provide a threaded fastener clamping tool capable of clamping by means of not only an exclusive clamping tool but also a universal clamping tool and enhancing a clamping operation in efficiency.

### BRIEF DESCRIPTION OF THE DRAWINGS

Fig. 1(a) is a plan view showing a bolt formed with a modified pentagonal drive shape according to a first embodiment of the invention, Fig. 1(b) being a partial, enlarged view.
Fig. 2(a) is a plan view showing a bolt formed with a modified hexagonal drive shape according to a second embodiment of the invention, Fig. 2(b) being a partial, enlarged view.
Fig. 3(a) is a plan view showing a bolt formed with a modified hexagonal drive shape according to a third embodiment of the invention, Fig. 3(b) being a partial, enlarged view.
Fig. 4(a) is a plan view showing a bolt formed with a modified hexagonal drive shape according to a fourth embodiment of the invention, Fig. 4(b) being a partial, enlarged view.
Fig. 5(a) is a plan view showing a M6 bolt and a M8 bolt, which are formed with a drive shape according to a sixth embodiment of the invention, Fig. 5(b) being a partial, enlarged view.
Fig. 6 is a plan view showing drive shapes formed on heads of the M6 bolt and the M8 bolt in comparison.
Fig. 7 is a front view showing essential parts of the M6 bolt and the M8 bolt shown in Fig. 6.
Fig. 8(a) is a front view showing a shuttle driver bit according to a seventh embodiment of the invention, Fig. 8(b) being a plan view.
Fig. 9 is a perspective view showing a M6 bolt, M8 bolt, shuttle driver bit and a hexagonal wrench.
Fig. 10 is a perspective view showing a state, in which shuttle driver bits or hexagonal wrenches of the same size are mounted on a M6 bolt and a M8 bolt.
Fig. 11 is a cross sectional view showing a state, in which shuttle driver bits of the same size are mounted on a M6 bolt and a M8 bolt.
Fig. 12(a) is a front view showing a conventional bolt, Fig. 12(b) being a plan view.
Fig. 13 is a view illustrating a state, in which a conventional hexagonal wrench having involved a clearance in manufacture is mounted on a fitting portion.
Fig. 14 is a view illustrating a conventional hex lobular.
Fig. 15 is a view illustrating a direction, in which clamping forces are applied on a conventional drive shape, which is regular hexagonal and a hex lobular.

### DESCRIPTION OF THE PREFERRED EMBODIMENTS

Preferred embodiments of the invention will be described below with reference to the drawings.

### (First embodiment)

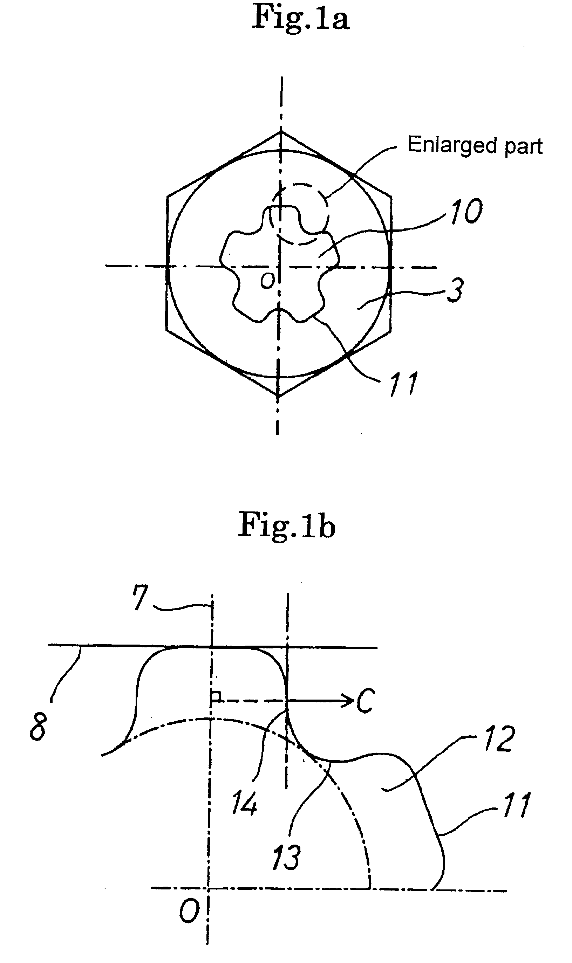

Fig. 1 shows a head 3 of a threaded fastener including a drive shape 10, into which a clamping tool is fitted. The drive shape 10 is composed of a modified pentagonal drive shape 11 having five projections 12. The modified pentagonal drive shape 11 comprises five projections 12, curved portions 13 and drive surfaces 14.

Tip ends of the five projections 12 are rounded in shape and formed to be wider than a hex lobular 6. The curved portions 13 are formed by denting portions between adjacent projections 12 toward the axis O. The drive surfaces 14 are formed between the projections 12 and the curved portions 13. The respective projections 12 are equiangularly spaced from one another to extend radially in five directions from the axis of the threaded fastener O.

A direction C of clamping forces acting on the drive surfaces 14 of the modified pentagonal drive shape 11 is substantially perpendicular to a straight line 7 passing through the axis O and apices of the projections and substantially in parallel to a straight line 8 perpendicular to the straight line 7. That is, in this case, an angle formed between the straight line 8 and the direction C is 0°, which is smaller than 15° of the hex lobular 6 and directed inward.

While the number of the projections 12 is five in this embodiment shown in Fig. 1, the number of the projections 12 may be three or five or more.

### (Second embodiment)

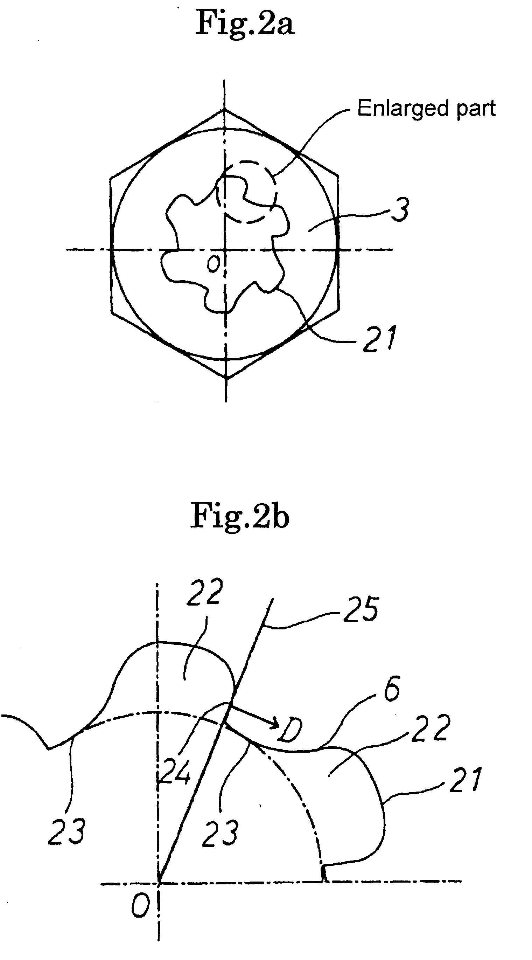

Fig. 2 shows a head 3 of a threaded fastener formed with a first modified hexagonal drive shape 21. The first modified hexagonal drive shape 21 is composed of projections 22 equiangularly spaced from one another to extend radially in six directions from an axis of the threaded fastener O, curved portions 23 inwardly dented, and drive surfaces 24 formed between the both.

The drive surfaces 24 are formed on a straight line 25 drawn from the axis O. A direction D of clamping forces on the drive surfaces 24 is substantially perpendicular to the straight line 25. Since the direction D is directed more inward than the direction C in the modified pentagonal drive shape 11 shown in Fig. 1, it is possible to transmit clamping forces efficiently.

In addition, if the number of the projections is six, wall surfaces opposite to the drive surfaces of the projections 22 are substantially the same in shape as one of a pair of symmetrical surface composing the projections 9 of the hex lobular 6 (as shown in Fig. 14). Therefore, when such threaded fastener is to be removed, a clamping tool for the hex lobular 6 can be made use of.

While the number of the projections 22 is six in this embodiment shown in Fig. 2, the number of the projections 22 may be two or more.

### (Third embodiment)

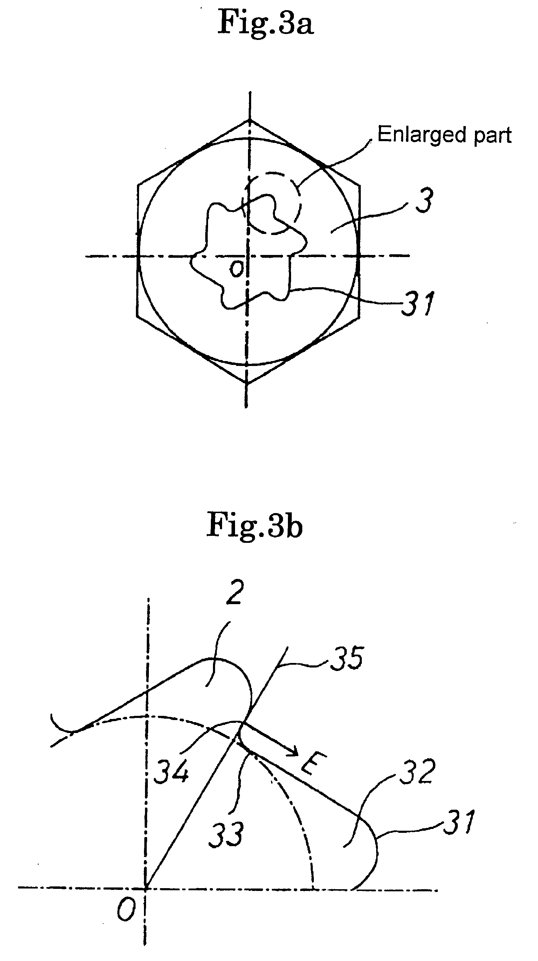

Fig. 3 is a plan view showing a head 3 of a threaded fastener formed with a second modified hexagonal drive shape 31. The second modified hexagonal drive shape 31 is composed of projections 32, curved portions 33 and drive surfaces 34. The drive surfaces 34 are positioned between the projections 32 and the curved portions 33 and formed on a straight line 35 drawn from the axis of the threaded fastener O.

A direction E of clamping forces on the drive surfaces 34 is substantially perpendicular to the straight line 35. Since the direction E is directed more inward than the direction C in the modified pentagonal drive shape 11 shown in Fig. 1, it is possible to transmit clamping forces efficiently. Wall surfaces opposite to the drive walls 34 are shaped to be straight. Since the second modified hexagonal drive shape 31 provides simple straight wall surfaces, formation is made easy.

While the number of the projections 32 is six in this embodiment shown in Fig. 3, the number of the projections 32 may be two or more.

### (Fourth embodiment)

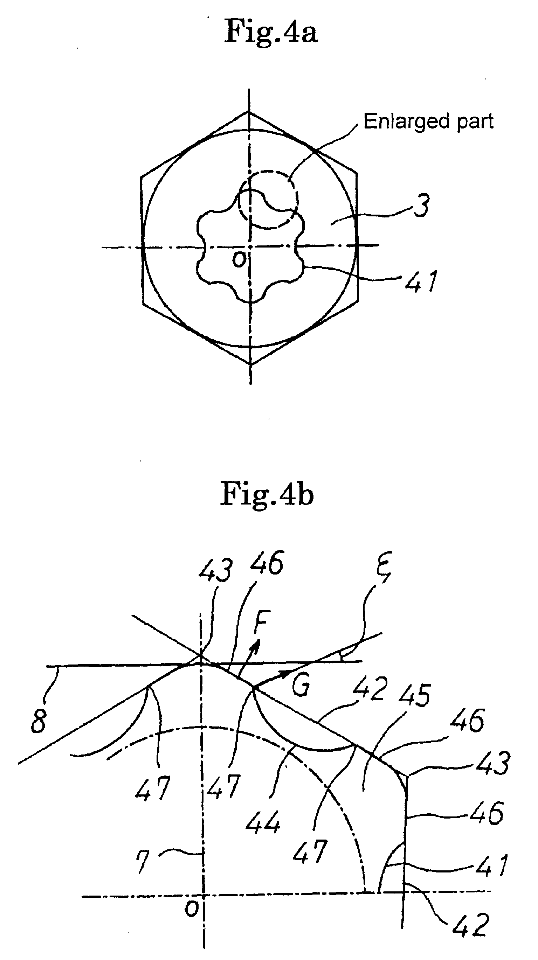

Fig. 4 shows a head 3 of a threaded fastener formed with a third modified hexagonal drive shape 41. The third modified hexagonal drive shape 41 is shaped based on a regular hexagon 42. With the third modified hexagonal drive shape 41, respective apices 43 of the regular hexagon 42 are rounded toward an axis, so-called beveled, and centers of the respective sides are arcuately dented toward the axis to form curved portions 44.

In this manner, six projections 45 are formed to be equiangularly spaced from one another to extend radially in six directions from the axis of the threaded fastener O, and to have tip ends thereof rounded. Sides of the regular hexagon 42 are left as straight portions 46 on both sides of the projections 45.

Corners 47 having an obtuse angle formed between the straight portions 46 and the curved portions 44 disperse clamping forces in two directions. More specifically, a part of clamping forces acts in a direction F perpendicular to the straight portions 46, and the remainder clamping forces acts in a direction G, which forms an angle ε of about 10° with a straight line 8. Clamping forces are dispersed in this manner, whereby they are prevented from being concentrated at a location as in the conventional regular hexagonal-shaped drive, and so can be transmitted efficiently.

Also, since the third modified hexagonal drive shape 41 is simpler in shape than the conventional hex lobular 6, manufacture is made easy. Further, since clamping forces are dispersed in two directions, they are prevented from being concentrated at a location, and so it is possible to markedly enhance durability of a clamping tool.

While the third modified hexagonal drive shape shown in Fig. 4 is shaped based on the regular hexagon 42, it can be shaped based on regular triangle, regular square, regular pentagon and regular heptagon. Also, the shape of the dented portions may be polygonal in place of the arcuate-shaped curved portions 44. When the shape, on which the drive shape is based, is in the form of regular triangle or regular pentagon, clamping forces can be directed more inward than in the case of the regular hexagon 42 so that it is possible to transmit clamping forces effectively. When the shape, on which the drive is based, is in the form of regular heptagon or more, clamping forces are directed outward. Since clamping forces can be dispersed in two directions to lead to an increase in contact area, however, the above measure is effective in precisely transmitting clamping forces. Also, in the case where the dented portions are made polygonal, clamping forces can be dispersed in two directions in the same manner as with the arcuate-shaped curved portions, and so it is possible to transmit clamping forces effectively.

### (Fifth embodiment)

The modified pentagonal drive shape 11, the first to third modified hexagonal drive shapes 21, 31, 41 and the modified polygonal drive shape shown in Figs. 1 to 4 are dented to present side surfaces substantially perpendicular to a bottom of the head. Such drive shapes can be also protruded convexly. In addition, it is possible to prevent coming-out, because the drive surfaces are substantially parallel to the axis of the threaded fastener.

In the case where the drive shape is concave, an engaging portion at a tip end of a clamping tool such as shuttle driver bits, wrenches or the like may be made convex so as to closely fit into a side surface of the drive shape. Meanwhile, in the case where the drive shape is convex, an engaging portion at a tip end of a clamping tool may be made concave so as to closely fit into the drive shape. With such arrangement, the drive shape and a tip end of a clamping tool are brought into surface contact with each other, so that precise fitting can be effected without generation of a gap between the threaded fastener and a clamping tool. Also, it is possible to transmit clamping forces efficiently.

### (Sixth embodiment)

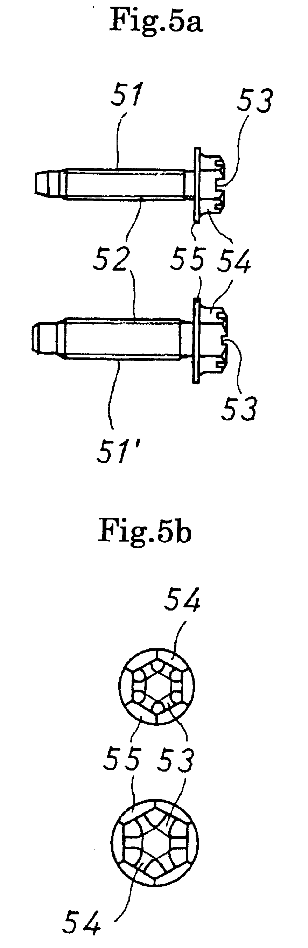

Fig. 5 shows two threaded fasteners having different thread part outer diameters.

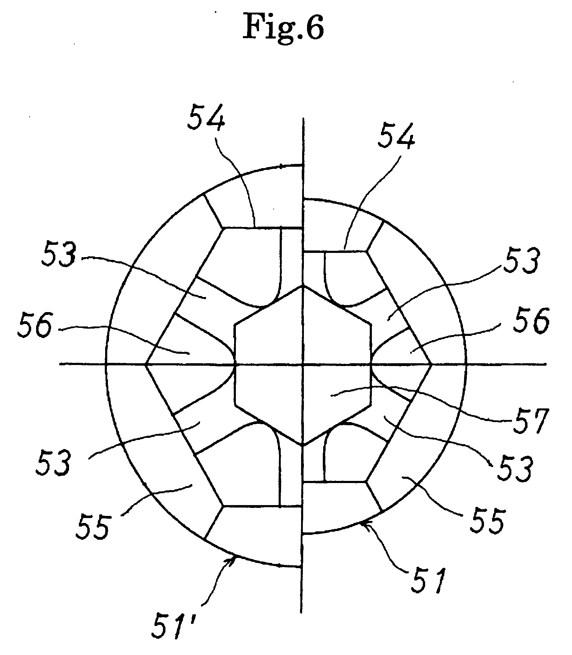

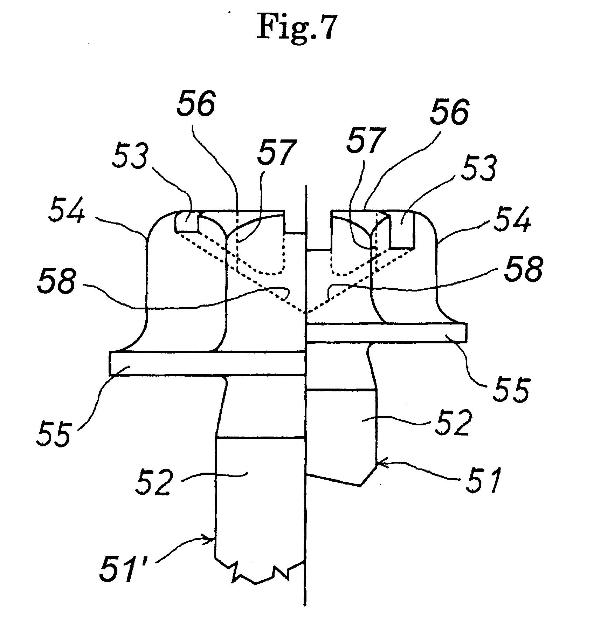

Bolts 51 and 51' have nominal screw sizes M6 and M8, respectively. They comprise a shank 52 and a hexagonal head 54 formed with a groove 53, into which a clamping tool is fitted. Figs. 6 and 7 show grooves 53 formed on the M6 bolt 51 and the M8 bolt 51', respectively. With either of the bolts, a head 54 having an outer shape of hexagonal configuration is formed on a circular-shaped flange 55. The grooves 53 are formed on a top surface 56. The grooves 53 are equiangularly spaced from one another to extend radially from an axis of the head 54. Also, a drive shape 57 presenting a space, in which a polygonal wrench such as hexagonal one is mounted, is formed concavely on the axis of the head.

As shown in Figs. 6 and 7, the grooves 53 extend through side surfaces of the head 54. However, it is not necessary to have the grooves 53 extending through the side surfaces but the side surfaces may be closed. Also, while a bottom surface of the drive shape 57 includes inclined surfaces 58, which are deepest at the center of the head 54, as shown in Fig. 7, the bottom surface of the drive shape 57 may be formed to be flat as a whole. If the drive shape 57 is shaped to be able to engage with a clamping tool and have strength enduring the stress at the time of clamping, the bottom surface thereof is not limited in depth. In addition, the drive shapes 57 of the M6 bolt 51 and the M8 bolt 51' are shown in Figs. 5 and 6 as being of the same size.

Since the heads of the above-mentioned M6 bolt 51 and M8 bolt 51' are hexagonal in external shape, conformable socket wrench and spanner can be used to clamp the bolts. Further, the provision of the grooves 53 enables clamping with the use of a minus shuttle driver, coin or the like.

### (Seventh embodiment)

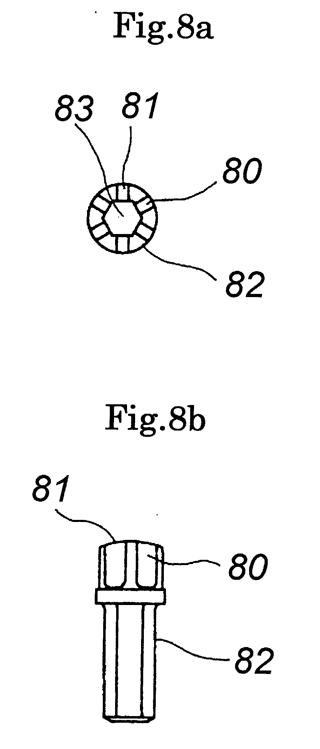

Fig. 8 shows engagement portions 80 formed on a tip end of a clamping tool adapted to be fitted closely into a threaded fastener. The engagement portions 80 are formed on a shuttle driver bit 82, and ridges 81 are formed on the engagement portions 80 to be equiangularly spaced from one another to extend radially from a center of an end surface. When such shuttle driver bit 82 is used, it is possible to clamp a threaded fastener without generation of coming-out.

Also, the radially formed ridges 81 make it possible to transmit clamping forces efficiently. In addition, torque can be transmitted further efficiently by forming a protrusion 83 of polygonal shape such as hexagonal one in a center of the end surface of the shuttle driver bit 82.

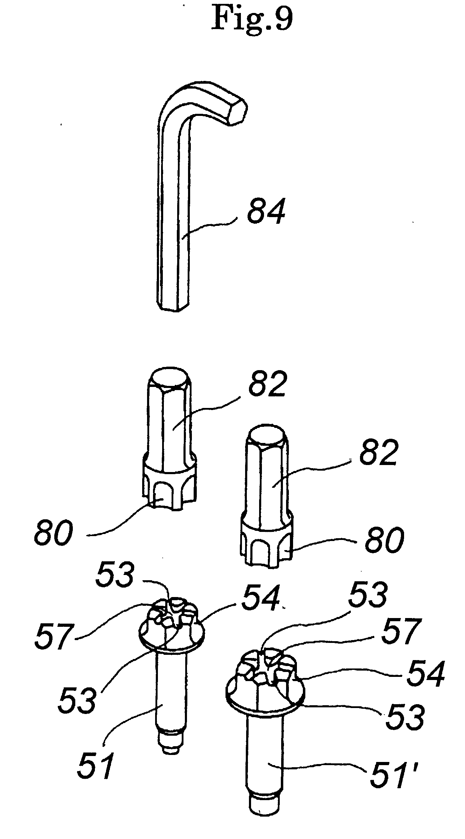

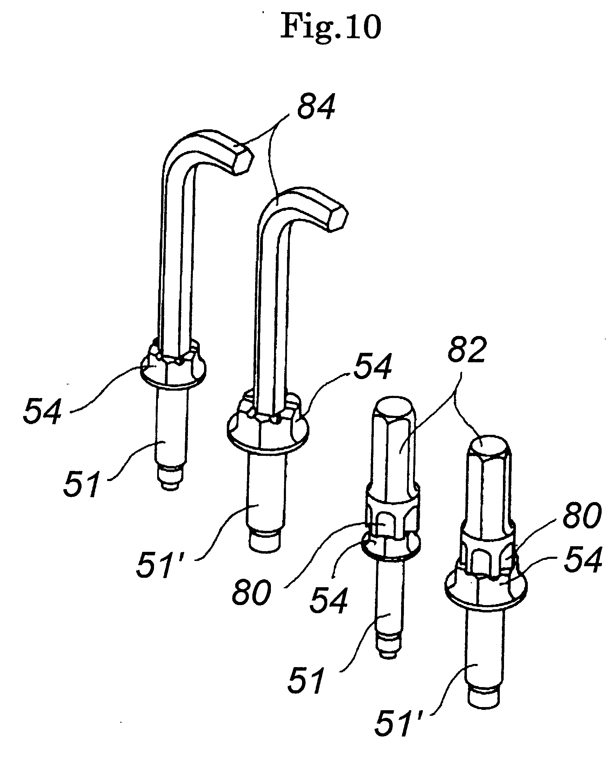

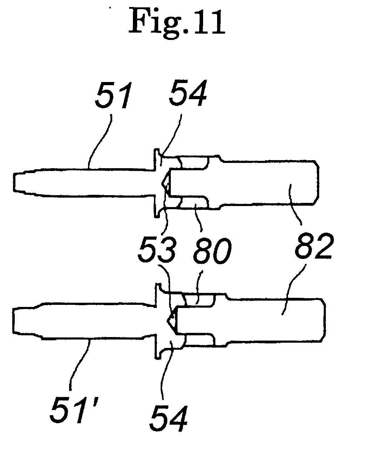

Figs. 9 to 11 show the procedure, in which a shuttle driver bit or hexagonal wrench having the same size as those of the M6 bolt 51 and the M8 bolt 51' having different screw sizes is mounted on the bolt.

The radial grooves 53 and the drive shapes 57 for mounting thereon a hexagonal wrench having the same size are provided on the M6 bolt 51 and the M8 bolt 51'.

Since the M6 bolt 51 and the M8 bolt 51' are provided with the drive shapes 57 for mounting thereon a hexagonal wrench having the same size, it is possible to mount a hexagonal wrench of the same size on the drive shapes 57 in the case of clamping the M6 bolt 51 and also in the case of clamping the M8 bolt 51'. Therefore, in an operation of clamping the M6 bolt 51 and also in an operation of clamping the M8 bolt 51', the same hexagonal wrench can be used, and so a clamping tool can be used in common.

Further, a hexagonal wrench having the same size can be mounted on the drive shapes 57 in the case of clamping the M6 bolt 51 and also in the case of clamping the M8 bolt 51'. Therefore, the same hexagonal wrench can be used in an operation of clamping the M6 bolt 51 and also in an operation of clamping the M8 bolt 51', and so a clamping tool can be used in common.

Since with such arrangement a clamping operation can be made without exchanging a clamping tool every threaded fastener, the operation can be made efficiently.

Screw parts, in which the grooves 53 and the drive shapes 57 are formed to be concave, have been illustrated with reference to Figs. 5 to 11. In clamping of a threaded fastener, clamping forces are transmitted by male and female fitting of a threaded fastener and the engagement portion 80 of a clamping tool. Owing to this, the convex and concave relationship between a threaded fastener and a clamping tool may be reversed.

More specifically, ridges are formed to be equiangularly spaced from one another to extend radially from an axis of a head 54 of a threaded fastener, and engagement portions adapted to engage closely with the ridges are formed on a tip end of a clamping tool. Grooves are formed on the engagement portions of the clamping tool to be equiangularly spaced from one another to extend radially from a center of an end surface. Even in this case, it is possible to transmit clamping forces efficiently to precisely clamp a threaded fastener. In addition, in the case where polygonal-shaped ridges 23 are provided on an axis of a head of a threaded fastener, polygonal-shaped recesses may be formed on a center of an end surface of a clamping tool to be able to be conformed to the ridges 23.

As described above, the threaded fastener and the threaded fastener clamping tool according to the invention prevent coming-out at the time of clamping the threaded fastener and enable efficiently transmitting a clamping stress of the clamping tool to the threaded fastener. Also, there are provided the threaded fastener and the threaded fastener clamping tool, by which a clamping operation can be made rapidly. Further, it is possible to make clamping with the use of a universal clamping tool and a common clamping tool, to enhance the efficiency in a clamping operation and to precisely clamp a threaded fastener making use of an exclusive clamping tool without generation of coming-out.

### In summary, the invention can be described as follows:

A threaded fastener formed on the middle of a head thereof comprises a concave or convex drive shape adapted to engage with a clamping tool. The drive shape comprises projections equiangularly spaced from one another to extend radially from an axis of the threaded fastener, curved portions formed between the projections to dent toward the axis, and drive surfaces formed between the projections and the curved portions. Clamping forces acting on the drive surfaces are directed toward substantially perpendicular to a straight line passing through the axis and apices of the projections.

## Claims

1. A threaded fastener formed on the middle of a head thereof with a concave or convex drive shape adapted to engage with a clamping tool,
said drive shape comprising projections equiangularly spaced from one another to extend radially from an axis of said threaded fastener, curved portions formed between said projections to dent toward said axis, and drive surfaces formed between said projections and said curved portions,
wherein clamping forces acting on said drive surfaces are directed toward substantially perpendicular to a straight line passing through said axis and apices of said projections.

2. A threaded fastener formed on the middle of a head thereof with a concave or convex drive shape adapted to engage with a clamping tool,
said drive shape comprising projections equiangularly spaced from one another to extend radially from an axis of said threaded fastener, curved portions formed between said projections to dent toward said axis, and drive surfaces formed between said projections and said curved portions,
wherein in the case that said drive surfaces are formed on an extended surface extended therefrom, said axis is positioned on said extended surface.

3. A threaded fastener formed on the middle of a head thereof with a concave or convex drive shape adapted to engage with a clamping tool,
said drive shape being configured such that respective apices of a regular polygon are rounded toward an axis of said threaded fastener, and centers of the respective sides of the regular polygon being dented toward said axis to form recessed portions,
wherein a portion of said respective sides of the regular polygon and a part of adjacent respective recessed portions are made two drive surfaces so that clamping forces acting on said two drive surfaces are dispersed in two directions.

4. A threaded fastener formed on the middle of a head thereof with a concave or convex drive shape adapted to engage with a clamping tool,
said drive shape being configured such that respective apices of a regular hexagon are rounded toward an axis of said threaded fastener, and centers of the respective sides of the regular hexagon being dented toward said axis to form arcuately recessed portions,
wherein a portion of said respective sides of the regular hexagon and a part of adjacent respective recessed portions are made two drive surfaces so that clamping forces acting on said two drive surfaces are dispersed in two directions.

5. A threaded fastener clamping tool formed at a tip end of said threaded fastener with a concave or convex engaging portion, wherein the tool is adapted to closely engage with said drive shape of said threaded fastener according to one of Claims 1 to 4.

6. A threaded fastener formed on a head thereof with a concave drive shape adapted to engage with a clamping tool,
said drive shape comprising grooves equiangularly spaced from one another to extending radially from an axis of the threaded fastener, and a mount space being formed on the middle of the head and communicated to said grooves to mount a polygonal wrench on the threaded fastener.

7. The threaded fastener according to Claim 6, wherein the mount space is the same even in the case where thread part outer diameters are different.

8. A threaded fastener formed on a head thereof with a convex drive shape adapted to engage with a clamping tool,
the drive shape comprising ridges formed to be equiangularly spaced from one another to extend radially from an axis of said threaded fastener.

9. A threaded fastener clamping tool used for clamping of a threaded fastener according to one of Claims 1 to 4, or 6 to 8, the tool comprising an engaging portion adapted to closely engage with said drive shape formed on said threaded fastener, wherein grooves or ridges are formed on said engaging portion to be equiangularly spaced from one another to extend radially from an axis of said threaded fastener.
